# EUROPÄISCHE PATENTANMELDUNG

(11) **EP 4 497 979 A1**
(43) Veröffentlichungstag der Anmeldung: **29.01.2025**
(21) Anmeldenummer: 24169523.8
(22) Anmeldetag: 10.04.2024
(51) Int. Cl.: F16K 31/06, F16K 31/40, F16K 31/42

(54) **DRUCKREGELVENTIL ZUM STEUERN ODER REGELN EINES DRUCKS EINES FLUIDS IN EINEM PILOTDRUCKRAUM UND SCHWINGUNGSDÄMPFER MIT EINEM SOLCHEN DRUCKREGELVENTIL**

(30) Priorität: 28.07.2023 DE 102023120125
(71) Anmelder: Kendrion (Villingen) GmbH, 78048 Villingen-Schwenningen (DE)
(72) Erfinder: Bergfeld, Björn, 72336 Balingen-Endingen (DE); Flühs, Joachim, 78050 Villingen-Schwenningen (DE); Heidebrecht, Helena, 78052 Villingen-Schwenningen (DE)
(74) Vertreter: Westphal, Mussgnug & Partner Patentanwälte mbB

(57) **Zusammenfassung**

Die vorliegende Erfindung betrifft ein Druckregelventil (1) zum Steuern oder Regeln eines Drucks eines Fluids in einem Pilotdruckraum, aufweisend ein Ventilgehäuse (10) mit mindestens einem Einlass, der mit dem Pilotdruckraum fluidisch verbindbar ist, und mindestens einem Auslass, und einem zwischen dem mindestens einen Einlass und dem mindestens einen Auslass angeordneten Hauptventilraum (50) mit einem Hauptventilschieber (54) und einem Hauptventilsitz (51) und einem Pilotventilraum (20) mit einem ersten Ventilsitz (21) und einer Pilotdichtung (40), einen Stößel (70) der mittels einer bestrombaren Betätigungseinrichtung (80) entlang einer Längsachse (L) bewegbar ist und die Pilotdichtung (40) zwischen einer ersten Stellung, in der die Pilotdichtung (40) dichtend an dem ersten Ventilsitz (21) anliegt und einer zweiten Stellung entlang der Längsachs (L) bewegen kann, wobei der Hauptventilschieber (54) durch eine entlang der Längsachse (L) hohl ausgebildete Federanordnung (60) gegen den Hauptventilsitz (51) vorgespannt gehalten ist, wobei die Federanordnung (60) einen steifen ersten Federabschnitt (61) und einen schwachen zweiten Federabschnitt (62) umfasst, die in Reihe geschaltet sind, und wobei der zweite Federabschnitt (62) in Wirkkontakt mit dem Hauptventilschieber (51) steht.

## Beschreibung

Die vorliegende Erfindung betrifft ein Druckregelventil zum Steuern oder Regeln eines Drucks eines Fuilds in einem Pilotdruckraum mit den Merkmalen des Patentanspruchs 1. Weiterhin betrifft die vorliegende Erfindung einen Schwingungsdämpfer mit einem solchen Druckregelventil mit den Merkmalen des Patentanspruchs 18.

Druckregelventile sind aus dem Stand der Technik in unterschiedlichen Ausgestaltungen vorbekannt. Beispielsweise werden im Stand der Technik gattungsgemäße Druckregelventile in Schwingungsdämpfern in Kraftfahrzeugen verwendet, wobei eine Dämpfungscharakteristik des Druckregelventils von einem das Proportionalventil durchströmenden Volumenstrom des verwendeten Fluids abhängt. Je nach Volumenstrom kann eine eher komfortbetonte weichere Dämpfung oder eine eher sportlichere härtere Dämpfung eingestellt werden. Bei Schwingungsdämpfern wird eine bestrombare Betätigungseinrichtung verwendet, mit welcher mehrere Dämpfungscharakteristiken vom Fahrer vorgegeben oder je nach Fahrzustand des Kraftfahrzeugs oder nach Zustand des Bodenbelags, entlang welchem sich das Kraftfahrzeug gerade bewegt, von einem Bordcomputer automatisch eingestellt werden können.

Das Fluid kann ein hydraulisches oder pneumatisches sein, wobei üblicherweise Hydraulikflüssigkeit oder Druckluft verwendet wird. Pilotdruckräume in hydraulisch oder pneumatisch betriebenen Vorrichtungen dienen dazu, vorgesteuerte Ventile, häufig auch als hydraulische oder pneumatische Schieber ausgeführt, zu steuern oder zu regeln. Wenn vorgesteuerte Ventile als Proportionalventile oder Proportionalschieber ausgestaltet werden, können die Volumenströme, die das Proportionalventil oder den Proportionalschieber durchströmen, mit dem Druck im Pilotdruckraum innerhalb bestimmter Grenzen stufenlos eingestellt werden.

Derartige Druckregelventile haben sich in der Vergangenheit bewährt, jedoch muss jederzeit gewährleistet sein, dass im Falle eines Ausfalls der elektrischen Energie und folglich des Ausfalls der Betätigungseinrichtung des Druckregelventils eine Ausfallsicherung, auch als "Failsafe" bezeichnet, vorhanden ist. Hierdurch wird gewährleistet, dass auch im Falle eines Ausfalls der elektrischen Energie das Fahrzeug mit einer bestimmten Dämpfungscharakteristik weiterbetrieben werden kann. Hierbei wird üblicherweise eine mittlere Dämpfungscharakteristik angestrebt, die weder zu hart noch zu weich ist.

Aus diesen Anforderungen ergibt sich ein relativ komplexer Aufbau der Vorrichtung, insbesondere des Schwingungsdämpfers, wie sich beispielsweise aus der US 2016 0 091 044 A1 und der WO 2016 066 314 A1 entnehmen lässt. Der Aufbau wird vornehmlich dadurch komplex, da mehrere Schieber verwendet werden müssen. Weitere Schwingungsdämpfer sind in der US 2016 0 369 862 A1, der JP 2009 115 319 A, der US 5 147 018 A, der WO 2011 023 351 A1 und der US 2005 0 016 086 A1 offenbart. Insbesondere der in der EP 2 678 581 B1 offenbarte Schwingungsdämpfer bietet auch im "Failsafe" eine mittlere Dämpfungscharakteristik.

Als Nachteil hat sich bei den aus dem Stand der Technik bekannten Druckregelventilen erwiesen, dass im untersten Regelbereich die Steuerung oder die Regelung des Drucks des Fluids stark variiert, wodurch insbesondere bei niedriger Bestromung der Betätigungseinrichtung das Dämpfungsverhalten stark variieren kann.

Hier setzt die vorliegende Erfindung an.

Die vorliegende Erfindung widmet sich der Aufgabe, ein gattungsgemäßes Druckregelventil vorzuschlagen, das die aus dem Stand der Technik bekannten Nachteile in zweckmäßiger Weise beseitigt. Das vorzuschlagende Druckregelventil soll auch bei einer geringen Bestromung im untersten Regelbereich eine wiederholgenaue Einstellung des Dämpfungsverhaltens ermöglichen. Auch soll eine geringere Exemplarstreuung erreicht werden, was bedeutet, dass die charakteristische Eigenschaft des Druckregelventil bei der Serienherstellung im Wesentlichen identisch ausfallen. Als eine weitere Aufgabe kann genannt werden, ein Druckregelventil zum Regeln eines Drucks eines Fluids in einem Pilotdruckraum anzugeben, welches einfach im Aufbau ist und den Druck im Pilotdruckraum auch dann auf einen bestimmbaren Wert regelt, wenn keine elektrische Energie zum Bestromen der Betätigungseinrichtung vorhanden ist. Des Weiteren liegt einer Ausgestaltung der vorliegenden Erfindung die Aufgabe zugrunde, eine Vorrichtung zu schaffen, mit welcher der Druck des Fluides im Pilotdruckraum regelbar ist und welche mit einem derartigen Druckregelventil betrieben werden kann.

Diese Aufgabe wird durch ein Druckregelventil mit den Merkmalen des Patentanspruchs 1 sowie einen Schwingungsdämpfer mit den Merkmalen des Patentanspruchs 18 gelöst.

Weitere vorteilhafte Ausgestaltungen der vorliegenden Erfindung werden in den Unteransprüchen angegeben.

Gattungsgemäße Druckregelventile mit den Merkmalen des Patentanspruchs 1, zum Steuern oder Regeln eines Drucks eines Fluides in einem Pilotdruckraum, weisen ein Ventilgehäuse mit mindestens einem Einlass und mindestens einem Auslass auf. Der mindestens eine Einlass ist mit dem Pilotdruckraum fluidisch verbindbar. Darüber hinaus weist das Ventilgehäuse einen zwischen dem mindestens einen Einlass und dem mindestens einen Auslass angeordneten Hauptventilraum mit einem Hauptventilschieber und einem Hauptventilsitz und einen Pilotventilraum mit einem ersten Ventilsitz und einer Pilotventildichtung auf. Der Pilotdruckraum ist vorzugweise mittels eines ersten Durchtrittskanals mit dem mindestens einen Auslass verbunden und mit einem zweiten Durchtrittskanal mit dem mindestens einen Einlass. Darüber hinaus weist das erfindungsgemäße Druckregelventil einen Stößel mit einer - vorzugsweise fest an dem Stö-ßel angeordneten - Pilotdichtung auf, wobei der Stößel mittels einer bestrombaren Betätigungseinrichtung entlang einer Längsachse zwischen einer ersten und einer zweiten Stellung bewegbar ist. Der Hauptventilschieber wird durch eine entlang der Längsachse hohl ausgebildete Federanordnung gegen den Hauptventilsitz vorgespannt gehalten. Erfindungsgemäß umfasst die Federanordnung einen steifen ersten Federabschnitt und einen schwachen zweiten Federabschnitt, die in Reihe geschaltet sind, wobei der schwache zweite Federabschnitt in Wirkkontakt mit dem Hauptventilschieber steht.

Die vorliegende Erfindung beruht auf der Idee, ein Druckregelventil vorzuschlagen, das ein komfortables Dämpfungsverhalten und ein sanftes Öffnungsverhalten ermöglicht. Längentoleranzen werden durch die Reihenschaltung der zwei Federabschnitte ausgeglichen, wobei die Vorspannung des schwachen zweiten Federabschnitts diese ausgleicht. Dadurch kann der Hauptventilschieber bereits bei einem geringen Druck öffnen und anschließend kommt erst der erste steife Federabschnitt mit einer hohen Fehlerrate zur Wirkung. Die hohl ausgebildete Federanordnung oder vorzugsweise die hohlzylindrische Federanordnung ermöglicht darüber hinaus eine möglichst störungsfreie Fluidkommunikation durch den Hauptventilraum hindurch zwischen dem mindestens einen Einlass und dem mindestens einen Pilotventilraum.

Eine Weiterbildung der vorliegenden Erfindung sieht vor, dass der erste Federabschnitt und/oder der zweite Federabschnitt jeweils durch eine Schraubenfeder, vorzugsweise eine Schraubendruckfeder, gebildet sind bzw. ist. Schraubenfedern sind kostengünstige und zuverlässige Bauteile und ermöglichen eine exakte Einstellung der Federrate, wodurch das Dämpfungsverhalten optimal eingestellt werden kann. So ist es bevorzugt, wenn die Schraubenfeder entlang der Längsachse orientiert angeordnet sind und einen ersten Endbereich und einen gegenüberliegenden zweiten Endbereich aufweist, wobei vorzugsweise die Schraubenfeder zumindest an einem Endbereich durch einen Dom positioniert gehalten ist.

Nach Maßgabe einer bevorzugten Ausgestaltung oder einem weiteren Aspekt der vorliegenden Erfindung kann der erste Federabschnitt durch eine Schraubenfeder gebildet sein und der zweite Federabschnitt mindestens zwei frei abstehenden Federfingern umfassen. Die freien Enden der Federfinger können bei einer - bevorzugt elastischen - Verformung der Federfinger in der Längsachse ausgelenkt bzw. verschoben werden. Ein derart ausgebildeter zweiter Federabschnitt ermöglicht eine besonders kurze Ausgestaltung der Federanordnung, wodurch das vorschlagsgemäße Druckregelventil eine besonders kompakte Bauweise aufweisen kann. Weiterhin ist es bevorzugt, wenn die mindestens zwei frei abstehenden Federfinger im Umfang um die Längsachse gleichmäßig verteilt angeordnet sind.

Bevorzugt ist der zweite Federabschnitt entlang der Längsachse gesehen radial innerhalb des ersten Federabschnitts angeordnet. Allerdings wird an dieser Stelle angemerkt, dass ebenfalls der zweite Federabschnitt entlang der Längsachse gesehen auch radial außerhalb oder auf einem gleichen Durchmessen mit dem ersten Federabschnitt angeordnet sein kann.

Gemäß einer Weiterbildung der vorliegenden Erfindung kann es vorteilhaft sein, wenn zwischen dem ersten Federabschnitt und dem zweiten Federabschnitt ein Anschlagabschnitt vorgesehen ist, der in einem zusammengedrückten Zustand des zweiten Federabschnitts zwischen dem ersten Federabschnitt und dem Hauptventilschieber beispielsweise an einem Anschlag an dem Hauptventilschieber zur Anlage kommt. Alternativ kann in dem zusammengedrückten Zustand des zweiten Federabschnitts der Anlageabschnitt zwischen dem ersten Federabschnitt und dem Ventilgehäuse beispielsweise an einem Anschlag an dem Ventilgehäuse zur Anlage kommen. In dieser Ausgestaltung steht das zweite Federelement in Wirkkontakt mit dem Ventilgehäuse. Der Anschlagabschnitt wird bevorzugter Weise durch den zweiten Federabschnitt im unbelasteten Zustand gefedert beabstandet zu dem Anschlag gehalten, wobei ein Abstand zwischen dem Anschlagabschnitt und dem Anschlag den maximalen Federweg des zweiten Federabschnitts vorgibt.

Darüber hinaus hat es sich als vorteilhaft erwiesen, wenn ein zweites Federelement den zweiten Federabschnitt und den Anschlagabschnitt umfasst, und dass die mindestens zwei freistehenden Federfinger von dem Anschlagabschnitt frei abstehen. Der Anschlagsabschnitt kann vorzugsweise ringförmig oder torusförmig ausgebildet sein, wobei die Federfinger radial und/oder in Umfangsrichtung, vorzugsweise nach innen, von dem Anschlagsabschnitt abstehen. Das zweite Federelement ist insbesondere einstückig ausgebildet und kann beispielsweise als Stanzteil hergestellt werden.

Eine Weiterbildung der vorliegenden Erfindung sieht vor, dass der Anschlagsabschnitt durch einen Federhalter gebildet ist, wobei der Federhalter eine ringförmig Form mit einem Z-förmigen Querschnitt aufweist. Der Federhalter kann als ein gesondertes Bauteil ausgebildet sein und kann die gegenüberliegenden Enden des ersten Federabschnitts und des zweiten Federabschnitts miteinander koppeln bzw. verbinden.

Weiterhin hat es sich als vorteilhaft erwiesen, wenn der Federhalter zumindest abschnittsweise topförmig ausgebildet ist und topfförmig den ersten Federabschnitt und/oder den zweiten Federabschnitt zumindest teilweise aufnimmt. Dadurch kann der zweite und schwache Federabschnitt zumindest teilweise radial innerhalb des ersten starken Federabschnitts angeordnet sein, wodurch eine besonders kompakte Bauweise realisiert werden kann.

Eine Weiterbildung der vorliegenden Erfindung sieht vor, dass mindestens ein Zentriermittel vorgesehen ist, durch das der erste Federabschnitt oder der zweite Federabschnitt positioniert gehalten wird. Besonders ist es bevorzugt, wenn der erste Federabschnitt durch mindestens ein erstes Zentriermittel und der zweite Federabschnitt durch mindestens ein zweites Zentriermittel, insbesondere in Bezug zu der Längsachse, positioniert gehalten wird. Das mindestens eine erste Zentriermittel kann beispielsweise wie bereits zuvor erwähnt durch einen Dorn realisiert werden, der in den ersten Federabschnitt hineinragt. Das mindestens eine erste Zentriermittel kann vorzugsweise an dem Ventilgehäuse ausgebildet sein. Das mindestens eine zweite Zentriermittel kann vorzugsweise mit dem Hauptventilschieber zusammenwirken und den zweiten Federabschnitt an dem Hauptventilschieber positioniert halten.

Insbesondere ist es nach Maßgabe einer Weiterbildung bevorzugt, wenn das mindestens eine Zentriermittel, insbesondere das mindestens eine zweite Zentriermittel, in eine Ausnehmung greift, die um einen Durchtrittskanal im Ventilgehäuse oder einen Durchlass im Hauptventilschieber zwischen den Hauptventilraum und dem Pilotventilraum angeordnet ist.

Eine bevorzugte Weiterbildung der vorliegenden Erfindung sieht vor, dass das mindestens eine Zentriermittel mindestens zwei Zentrierfinger umfasst, die frei abstehend ausgebildet sind. Insbesondere ist es bevorzugt, wenn die mindestens zwei Zentrierfinger an dem zweiten Federelement angeordnet sind und entweder von dem zweiten Federabschnitt und/oder von dem Anschlagsabschnitt frei abstehen. Die Zentrierfinger können zu dem Anschlagsabschnitt und/oder Federabschnitt abgewinkelt angeordnet sein, wodurch die Zentrierfinger in einen einfachen Wirkkontakt mit dem Ventilgehäuse oder dem Hauptventilschieber zur zentrierten Anordnung des zweiten Federelements kommen können. Für den Fall, dass die Zentrierfinger von dem Anschlagsabschnitt abstehen ist kann es vorteilhaft sein, wenn die Zentrierfinger zwischen den mindestens zwei Federfingern angeordnet sind.

Weiterhin hat es sich als vorteilhaft erwiesen, wenn in dem Pilotventilraum der erste Ventilsitz und ein zweiter Ventilsitz in der Längsachse und gegenüberliegend angeordnet sind. Die Pilotdichtung kann in der ersten Stellung an dem ersten Ventilsitz dichtend anliegen und in der zweiten Stellung an dem zweiten Ventilsitz dichtend anliegen. Die Pilotdichtung weist vorzugsweise eine erste Dichtfläche und eine zweite Dichtfläche auf, die in der Längsachse auf gegenüberliegenden Seiten ausgebildet sind. Die erste Dichtfläche ist konfiguriert mit dem ersten Ventilsitz zusammen zu wirken und die zweite Dichtfläche ist konfiguriert, mit dem zweiten Ventilsitz zusammen zu wirken.

Nach Maßgabe einer weiteren bevorzugten Ausgestaltung ist der Pilotventilraum innerhalb des Ventilgehäuses angeordnet, wobei bevorzugt der Pilotventilraum von dem Ventilgehäuse umschlossen wird. In dem Pilotventilraum sind in der Längsachse auf gegenüberliegenden Seiten des Ventilgehäuses der erste Ventilsitz und der zweite Ventilsitz angeordnet, wobei der erste Ventilsitz eine Öffnung des ersten Durchtrittskanals umrahmt bzw. umgibt, der den Pilotventilraum mit dem mindestens einen Auslass verbindet und der zweite Ventilsitz eine Öffnung des zweiten Durchtrittskanals umrahmt bzw. umgibt, der den Pilotventilraum mit dem mindestens einen Einlass verbindet.

Auch hat es sich als vorteilhaft erwiesen, wenn das Ventilgehäuse einen Wandungsabschnitt umfasst, der den ersten Ventilsitz und den ersten Durchtrittskanal aufweist. Der Wandungsabschnitt kann nach Art eines Ventilgehäuses ausgebildet sein und vorzugsweise den Pilotventilraum in der Längsachse einseitig abschließen, wodurch sich ein vorteilhafter Aufbau des Ventilgehäuses ergibt.

Darüber hinaus hat es sich als vorteilhaft erwiesen, wenn der Wandungsabschnitt mindestens eine Durchlassbohrung aufweist, die einen Bypass um den ersten Ventilsitz bildet. Der Bypass ermöglicht sowohl in der ersten Stellung als auch in der zweiten Stellung des Stößels eine Fluidkommunikation zwischen dem Pilotventilraum und einer von dem Pilotventilraum abgewandten Seite des Wandungsabschnitts und ermöglicht eine Fluidkommunikation zwischen dem Pilotventilraum und dem mindestens einen Auslass, insbesondere dann, wenn sich der Stößel in der ersten Stellung befindet und die Pilotdichtung an dem ersten Ventilsitz dichtend anliegt.

Weiterhin hat es sich als vorteilhaft erwiesen, wenn auf der von dem ersten Ventilsitz abgewandten Seite des Wandungsabschnitts eine gegen den Wandungsabschnitt vorgespannte Fail-safe-Dichtung angeordnet ist, die an dem Wandungsabschnitt derart anliegen kann, dass die Durchlassbohrung verschlossen ist. Die gegen den Wandungsabschnitt vorgespannte Failsafe-Dichtung kann einen Druck in dem Pilotventilraum vorgeben, bei dem die Durchlassbohrung freigegeben wird und das Fluid von dem Pilotventilraum durch die Durchlassbohrung zum mindestens einen Auslass fließen kann. Durch die Durchlassbohrung und die mit der Durchlassbohrung zusammenwirkende Failsafe-Dichtung wird gewährleistet, dass auch im Falle eines Ausfalls der elektrischen Energie der Stoßdämpfer mit einer bestimmten Dämpfungscharakteristik weiterbetrieben werden kann. Durch eine Wahl der Vorspannnung der Failsafe-Dichtung kann die Dämpfungscharakteristik definiert werden, wobei diese typischer Weise derart gewählt wird, dass diese weder zu hart noch zu weich ist.

Eine vorteilhafte Weiterbildung der vorliegenden Erfindung sieht vor, dass der Wandungsabschnitt durch ein Ventilgehäusedeckelteil gebildet ist. Das Ventilgehäusedeckelteil kann beispielsweise als scheibenförmiges Bauteil ausgebildet sein und zusammen mit einem Hauptventilgehäuseteil den Pilotventilraum zumindest bereichsweise umschließen.

Eine Weiterbildung der vorliegenden Erfindung sieht vor, dass das Ventilgehäuse einen zweiten Wandungsabschnitt umfasst, der den zweiten Ventilsitz umfasst. Der zweite Wandungsabschnitt kann darüber hinaus auch den zweiten Durchtrittskanal umfassen, wobei der zweite Durchtrittskanal vorzugsweise als Bohrung ausgebildet ist. Der zweite Wandungsabschnitt ist vorzugsweise in der Längsachse auf der dem ersten Wandungsabschnitt gegenüberliegenden Seite des Ventilgehäuses angeordnet, wobei der zweite Wandungsabschnitt integral mit dem Hauptventilgehäuseteil ausgebildet sein kann.

Eine Weiterbildung der vorliegenden Erfindung sieht vor, dass der zweite Wandungsabschnitt eine Einsetzbuchse umfasst. Die Einsetzbuchse kann insbesondere nach Art einer Einpressbuchse in eine entsprechende Öffnung, beispielsweise eines hülsenförmigen Doms, entlang der Längsachse in das Hauptventilgehäuseteil eingesetzt sein, wodurch sich die Position des zweiten Ventilsitzes in der Längsachse exakt einstellen lässt.

Ein weiterer Aspekt der vorliegenden Erfindung betrifft einen Schwingungsdämpfer mit einem zuvor beschriebenen Druckregelventil.

Nachfolgend werden unter Bezugnahme auf die begleitenden Zeichnungen fünf beispielhafte Ausführungsbeispiele eines erfindungsgemäßen Druckregelventils im Detail beschrieben. Es zeigen:
- Figur 1: eine Schnittdarstellung eines Druckregelventils mit einer bestrombaren Betätigungseinrichtung, aufweisend einen Hauptventilschieber, der in einem Hauptventilraum durch eine Federanordnung mit einem ersten Federabschnitt und einem zweiten Federabschnitt gegen einen Hauptventilsitz vorgespannt ist, einen Stößel und eine an dem Stößel angeordnete Pilotdichtung, wobei eine Betätigungseinrichtung bestromt ist und die Pilotdichtung in einer ersten Stellung an einem ersten Ventilsitz in einem Pilotventilraum dichtend anliegt,
- Figur 2: eine Detaildarstellung eines den zweiten Federabschnitt bildenden Federelements,
- Figur 3: eine Schnittdarstellung eines zweiten Ausführungsbeispiels des Druckregelventils, wobei eine Betätigungseinrichtung unbestromt ist,
- Figur 4: eine Detaildarstellung des zweiten Federabschnitts des Druckregelventils gemäß Figur 3,
- Figur 5: eine Schnittdarstellung eines dritten Ausführungsbeispiels des Druckregelventils wobei eine Betätigungseinrichtung unbestromt ist,
- Figur 6: eine Detaildarstellung des zweiten Federabschnitts des Druckregelventils gemäß Figur 5,
- Figur 7: eine Schnittdarstellung eines vierten Ausführungsbeispiels des Druckregelventils, wobei eine Betätigungseinrichtung unbestromt ist,
- Figur 8: eine Detaildarstellung des zweiten Federabschnitts des Druckregelventils gemäß Figur 7, und
- Figur 9: eine Schnittdarstellung eines fünften Ausführungsbeispiels des Druckregelventils, wobei eine Betätigungseinrichtung unbestromt ist.

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

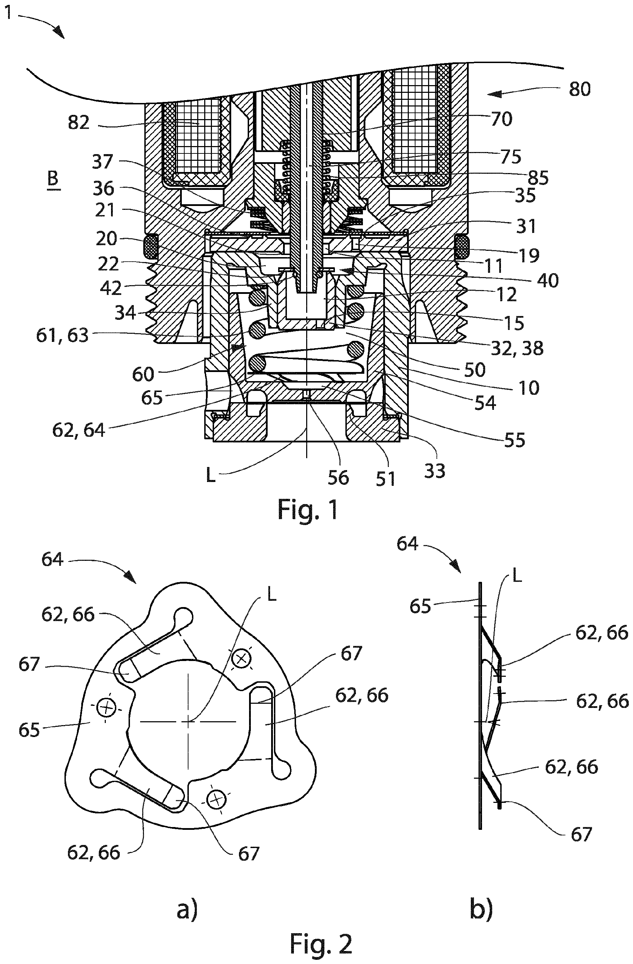

Zunächst wird im Folgenden detailliert ein erstes beispielhaftes Ausführungsbeispiel anhand der Figur 1 beschrieben. Anschließend werden die weiteren Ausführungsbeispiele verkürzt beschrieben, wobei lediglich auf die Unterschiede gegenüber den vorherigen Ausführungsbeispielen eingegangen wird. An dieser Stelle wird bereits angemerkt, dass die Merkmale der Ausführungsbeispiele und auch der Weiterbildungen miteinander kombiniert werden können.

Figur 1 zeigt eine erste beispielhafte Ausführungsform eines Druckregelventils 1 zum Steuern oder Regeln eines Drucks eines Fluids. Das Druckregelventil 1 kann beispielsweise in einem (nicht dargestellten) Schwingungsdämpfer, insbesondere eines Kraftfahrzeugs, verwendet werden, um eine Dämpfungscharakteristik des Schwingungsdämpfers einzustellen.

Das Druckregelventil 1 umfasst ein Ventilgehäuse 10 mit mindestens einem Einlass und mindestens einem Auslass. Der mindestens eine Einlass kann mit einem Pilotdruckraum verbunden werden.

Das Ventilgehäuse 10 umschließt zumindest teilweise einen Hauptventilraum 50 und einen Pilotventilraum 20, die in der-Längsachse L beabstandet zueinander angeordnet sind. In dem Hauptventilraum 50 ist ein Hauptventilsitz 51 ausgebildet und ein Hauptventilschieber 54 angeordnet.

In dem Pilotventilraum 20 sind ein erster Ventilsitz 21 und ein zweiter Ventilsitz 22 angeordnet. Der erste Ventilsitz 21 und der zweite Ventilsitz 22 sind in dem Ventilgehäuse 10 oder genauer gesagt in dem Pilotventilraum 20 in der Längsachse L auf gegenüberliegenden Seiten angeordnet.

Das Ventilgehäuse 10 umfasst einen ersten Wandungsabschnitt 31, eine zweiten Wandungsabschnitt 32 und einen dritten Wandungsabschnitt 33. In der Längsachse 1 ist der zweite Wandungsabschnitt 32 zwischen dem ersten Wandungsabschnitt 31 und dem dritten Wandungsabschnitt 33 angeordnet.

Der erste Wandungsabschnitt 31 umfasst den ersten Durchtrittskanal 11, den ersten Ventilsitz 21 und vorzugsweise eine später noch im Detail beschriebene Durchlassbohrung 19. Der zweite Wandungsabschnitt 32 umfasst den zweiten Durchtrittskanal 12 und den zweiten Ventilsitz 22, wobei der erste Wandungsabschnitt 31 und der zweite Wandungsabschnitt 32 den Pilotventilraum 20 in der Längsachse L vorzugsweise begrenzen.

Der zweite Wandungsabschnitt 32 kann einen als Hülsenabschnitt ausgebildeten Dom 34 umfassen, in den eine Einsetzbuchse 38 eingesetzt bzw. eingepresst ist, die vorzugsweise den zweiten Durchtrittskanal 12 und den zweiten Ventilsitz 22 aufweist. Beim Einpressen der Einsetzbuchse 38 kann die Position des zweiten Ventilsitzes 22 in dem Ventilgehäuse 10 in der Längsachse L exakt eingestellt werden.

Der dritte Wandungsabschnitt 33 umfasst den Hauptventilsitz 51 und begrenzt vorzugsweise den Hauptventilraum 50 mit dem zweiten Wandungsabschnitt 32.

Der Hauptventilschieber 54 ist in der Längsachse L in dem Ventilgehäuse 10 bzw. in dem Hauptventilraum 50 beweglich gehalten und wird durch eine Federanordnung 60 gegen einen Hauptventilsitz 51 in eine geschlossene Stellung vorgespannt gehalten. In der geschlossenen Stellung liegt der Hauptventilschieber 54 dichtend auf dem Hauptventilsitz 51 an. Die Führung des Hauptventilschiebers 54 in der Längsachse L erfolgt dabei vorzugsweise durch das Ventilgehäuse 10. Hierzu können eine innere Mantelfläche des Ventilgehäuses 10, die auch den Hauptventilraum 50 umreift, an eine äußere Mantelfläche des Hauptventilschiebers 54 derart angepasst sein, dass der Hauptventilschieber 54 leichtgängig in der Längsachse L lineargeführt ist.

Der Hauptventilschieber 54 weist vorzugsweise koaxial zu der Längsachse L eine Durchlassöffnung 56 auf, durch die das Fluid von dem mindestens einen Einlass zu dem Pilotventilraum 20 strömen kann.

Auf der dem Pilotventilraum 20 zugewandten Seite des Hauptventilschiebers 54 kann um die Durchlassöffnung 56 eine Ausnehmung 55 ausgebildet sein, die eine Aufweitung des durchströmten Querschnitts ermöglicht.

Wie insbesondere den Detaildarstellungen gemäß den Figuren 1, 3, 5, 7 und 9 entnommen werden kann, ist der Hauptventilsitz 51 in dem dritten Wandungsabschnitt 33 angeordnet, der nach Art eines Deckels den Hauptventilraum 50 in der Längsachse L in Richtung des Einlasses bzw. des Pilotdruckraums abschließt.

Das Ventilgehäuse 10 - oder genauer ausgedrückt der dritte Wandungsabschnitt 33 - kann eine vorzugsweise koaxial zu dem Hauptventilschieber 54 angeordnete Durchbrechung aufweisen, die den mindestens einen Einlass des Druckregelventils 1 bilden kann.

Die Federanordnung 60 ist entlang der Längsachse L hohl ausgebildet und kann als im Wesentlichen hohlzylindrisch beschrieben werden.

Die Federanordnung 60 umfasst einen steifen ersten Federabschnitt 61 und einen zweiten schwachen Federabschnitt 62, die in Reihe geschaltet sind.

Unter einem steifen ersten Federabschnitt 61 und einem schwachen zweiten Federabschnitt 62 ist zu verstehen, dass die Federrate des ersten Federabschnitts 61 größer ist als die Federrate des zweiten Federabschnitts 62, wobei bevorzugt das Verhältnis mindestens 2:1, vorzugsweise 5:1, noch weiter bevorzugt mindestens 10:1 und noch weiter bevorzugt mindestens 20:1 beträgt. Der Federweg des ersten Federabschnitts 61 ist ebenfalls größer als der Federweg des zweiten Federwegs, wobei das Verhältnis mindestens 2:1, vorzugsweise 5:1, noch weiter bevorzugt mindestens 10:1 und noch weiter bevorzugt mindestens 20:1 beträgt.

In der Längsachse L gesehen ist der erste Federabschnitt 61 innerhalb des zweiten Federabschnitts 62 angeordnet, wodurch der durchströmte Querschnitt durch die Federanordnung 60 möglichst groß ist.

Der erste Federabschnitt 61 weist einen ersten Endbereich und einen zweiten Endbereich auf, wobei der erste Endbereich an dem Ventilgehäuse 10 abgestützt ist.

Der zweite Federabschnitt 62 weist einen ersten Endbereich und einen zweiten Endbereich auf, wobei der zweite Endbereich an dem Hauptventilschieber 54 abgestützt ist. Der zweite Federabschnitt 62 steht demnach in Wirkkontakt mit dem Hauptventilschieber 54.

Der zweite Endbereich des ersten Federabschnitts 61 ist mit dem ersten Endabschnitt des zweiten Federabschnitts 62 gekoppelt.

Der erste Federabschnitt 61 kann gemäß der dargestellten und beispielhaften Ausführungsbeispiele durch ein vorzugsweise als Schraubenfeder, insbesondere Schraubendruckfeder, ausgebildetes erstes Federelement 63 ausgebildet sein.

Den Figuren 1, 3, 5, 7 und 9 kann darüber hinaus entnommen werden, dass zwischen dem ersten Federabschnitt 61 und dem zweiten Federabschnitt 62 ein Anschlagabschnitt 65 angeordnet ist und dass über den Anschlagabschnitt 65 der erste Federabschnitt 61 mit dem zweiten Federabschnitt 62 gekoppelt ist. Der zweite Federabschnitt 62 und der zwischen dem ersten Federabschnitt und dem zweiten Federabschnitt 62 angeordnete Anschlagsabschnitt 65 sind Gegenstand der unterschiedlichen Ausführungsformen und werden weiter unten noch detailliert beschrieben, wobei die Funktion identisch ist.

Der schwache zweite Federabschnitt 62 weist eine sehr geringe Federrate von beispielsweise <1 N/mm, vorzugsweise < 0,5-0,3N/mm, auf, wodurch der Hauptventilschieber 54 geringfügig vorgespannt ist. Dadurch wird ein sanftes Öffnungsverhalten des Druckregelventils 1 ermöglicht. Längentoleranzen werden durch die Reihenschaltung der zwei Federabschnitte 61, 62 ausgeglichen, da die Vorspannung des schwachen zweiten Federabschnitts diese ausgleicht.

Sobald ein geringfügiger Druck durch den mindestens einen Einlass auf den Hauptventilschieber 54 wirkt, wird dieser in der Längsachse L in Richtung des Pilotventilraumes 20 verschoben, bis dass der maximale Federweg des zweiten Federabschnitts 62 erreicht ist und der Anschlagsabschnitt 65 an dem Hauptventilschieber 54 zur Anlage kommt. Danach ist eine weitere Verschiebung des Hauptventilschiebers 54 in der Längsachse L nur entgegen der Federkraft des ersten Federabschnittes 61 möglich.

Der Pilotventilraum 20 ist unter anderem mittels eines ersten Durchtrittskanals 11 mit dem mindestens einen Auslass verbunden. Darüber hinaus ist der Pilotventilraum 20 mittels eines zweiten Durchtrittskanals 12 über den Hauptventilraum 50 mit dem mindestens einen Einlass verbunden, wodurch das Fluid durch den mindestens einen Einlass und den zweiten Durchtrittskanal 12 in den Pilotventilraum 20 strömen kann und durch den ersten Durchtrittskanal 11 zu dem mindestens einen Auslass abfließen kann.

Das Fluid muss daher von dem mindestens einen Einlass zunächst durch den Hauptventilraum 50, die Durchlassöffnung 56 des Hauptventilschiebers 54 und durch den zweiten Durchtrittskanal 12 strömen, bevor es in den Pilotventilraum 20 eintreten kann. Dabei kann es vorteilhaft sein, wenn eine Öffnung 15 des zweiten Durchtrittskanals 12 zum Hauptventilraum 50 in einer Ebene quer zu der Längsachse L versetzt zu der Durchlassöffnung 56 des Hauptventilschieber 54 angeordnet ist.

Darüber hinaus weist das Druckregelventil 1 eine bestrombare Betätigungseinrichtung 80 auf, wobei die eine bestrombare Betätigungseinrichtung 80 - wie in dem dargestellten Ausführungsbeispiel - vorzugsweise durch einen elektromagnetischen Aktor gebildet werden kann.

Die Betätigungseinrichtung 80 kann in einem Aktorgehäuse 81 aufgenommen sein, wobei die Betätigungseinrichtung 80 darüber hinaus eine Erregerspule 82, einen Anker 83 und eine Rückstellfeder 85 umfasst. Der Anker 83 kann entlang einer Längsachse L bei einer Bestromung der Erregerspule 82 entgegen einer Federkraft der Rückstellfeder 85 auf bekannte Weise bewegt werden.

Das Aktorgehäuse 81 weist einen Aufnahmebereich auf, in den das Ventilgehäuse 10 zumindest teilweise eingesetzt werden kann. Das Ventilgehäuse 10 kann in dem Aufnahmebereich des Aktorgehäuses 81 fest angeordnet sein, beispielsweise durch eine form-, kraft- und/oder stoffschlüssige Verbindung.

Weiterhin weist das Druckregelventil 1 einen Stößel 70 auf, wobei der Stößel 70 durch die Betätigungseinrichtung 80 entlang der Längsachse L bewegt werden kann. Hierzu ist der Stö-ßel 70 vorzugsweise mit dem Anker 83 verbunden und kann ferner mittels Lagerelementen 87 an dem Aktorgehäuse 81 entlang der Längsachse L beweglich gelagert gehalten werden.

Der Stößel 70 ragt aus dem Aktorgehäuse 81 in das Ventilgehäuse 10. Insbesondere, wie den Detaildarstellungen der Figuren 2 bis 9 entnommen werden kann, ragt ein erstes freies Ende des Stößels 70 in den Pilotventilraum 20.

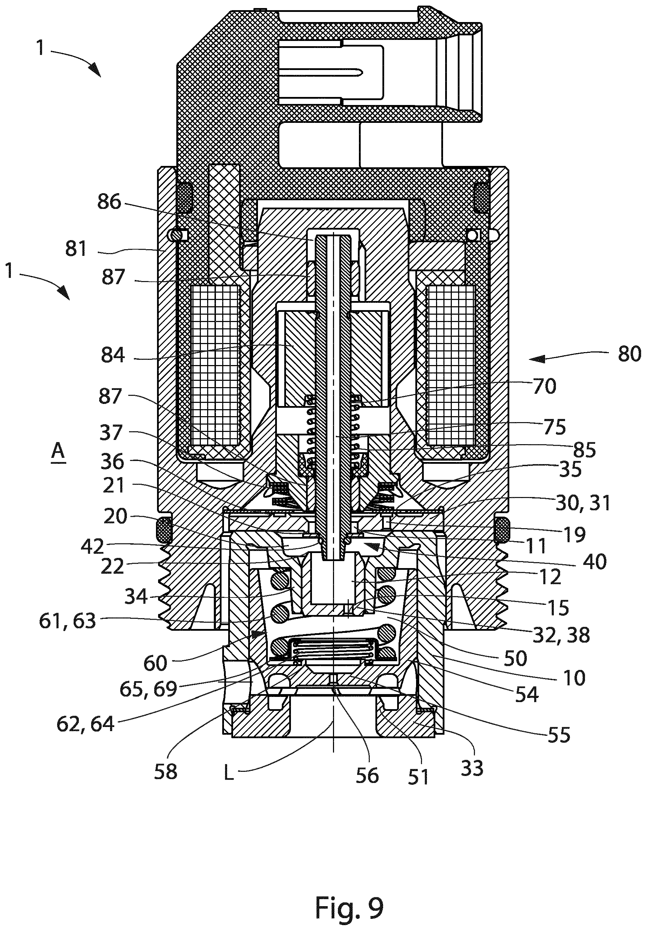

Darüber hinaus kann den begleitenden Figuren entnommen werden, dass der Stößel 70 eine Druckausgleichsbohrung 75 aufweist, durch die der Stößel 70 entlang der Längsachse L durchströmt werden kann. Folglich kann das Fluid von dem ersten freien Ende durch den Stößel 70 hindurch in eine dem Anker 83 gegenüberliegende Druckausgleichskammer 86 (siehe Figur 9) strömen, wodurch ein Druckausgleich erfolgen kann und das Druckregelventil 1 druckausgeglichen ausgebildet sein kann.

Der Stößel 70 weist weiterhin eine Pilotdichtung 40 auf, die an dem Stößel 70, bevorzugt benachbart zu dem freien Ende, fest angeordnet ist. Die Pilotdichtung 40 kann beispielsweise, wie in den begleitenden Figuren gezeigt ist, mittels einer Pilotdichtungssicherung 42 fest an dem Stößel 70 befestigt sein.

Die Pilotdichtung 40 kann im Wesentlichen als ringförmige Scheibe beschrieben werden und weist eine erste Dichtfläche und eine zweite Dichtfläche auf, wobei die erste Dichtfläche und die zweite Dichtfläche in der Längsachse L auf gegenüberliegenden Seiten angeordnet ist.

In einem betätigten Zustand der Betätigungseinrichtung 80 gemäß Figur 1 ist die Pilotdichtung 40 in einer zweiten Stellung angeordnet und die Pilotdichtung 40 liegt dichtend auf dem zweiten Ventilsitz 22 an und verschließt den zweiten Durchtrittskanal 12. In Figur 1 ist die zweite Stellung durch ein "B" kenntlich gemacht.

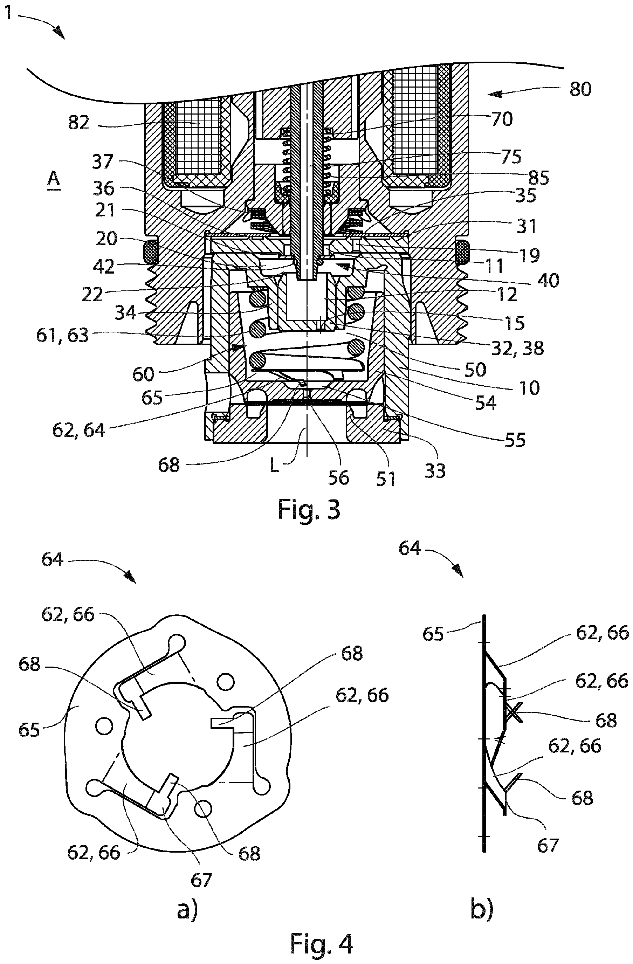

In einem unbetätigten Zustand der Betätigungseinrichtung 80 gemäß den Figuren 3, 5, 7 und 9 wird die Pilotdichtung 40 mittels der Rückstellfeder 85 in einer ersten Stellung angeordnet, die in den Figuren mit "A" gekennzeichnet ist. In der ersten Stellung liegt die Pilotdichtung 40 an dem ersten Ventilsitz 21 dichtend an und verschließt den ersten Durchtrittskanal 11.

In der ersten Stellung A der Pilotdichtung 40 kann das Fluid aus dem Pilotventilraum 20 nicht durch den ersten Durchtrittskanal 11 in Richtung des mindestens einen Auslasses strömen. Anders ausgedrückt, ist der Pilotventilraum 20 in dieser ersten Stellung A auslassseitig verschlossen.

In der zweiten Stellung B der Pilotdichtung 40 kann das Fluid nicht in den Pilotventilraum 20 durch den zweiten Durchtrittskanal 12 vom mindestens einen Einlass kommend strömen. Anders ausgedrückt, ist der Pilotventilraum 20 in dieser ersten Stellung A einlassseitig verschlossen.

In einem Regelbetrieb befindet sich die Pilotdichtung 40 zwischen der ersten Stellung A und der zweiten Stellung B und zwar in Abhängigkeit von der an der Betätigungseinrichtung anliegenden Stromstärke. Die Position der Pilotdichtung 40 ergibt sich aus dem Kräftegleichgewicht Kraft der Betätigungseinrichtung 80, einer Rückstellfederkraft der Rückstellfeder 85, Fluid-Druckkraft und der Federkraft des ersten Federabschnitts 61.

Eine Position der Pilotdichtung 40 im Regelbetrieb ermöglicht einen Durchfluss durch den Pilotventilraum 20 und somit eine Druckregelung des Drucks im Pilotraums und im Hauptventilraum 50. Dadurch kann das Öffnungsverhalten des Hauptschiebers 51 und damit das Dämpfungsverhalten des Schwingungsdämpfers verstellt werden.

Darüber hinaus kann auf der von dem Pilotventilraum 20 abgewandten Seite des ersten Wandungsabschnitts 31 eine Failsafe-Dichtung 35 angeordnet sein, die gegen den ersten Wandungsabschnitt 31 vorgespannt gehalten wird und dabei dichtend an einem Failsafe-Sitz 36 der Durchlassbohrung 19 anliegt.

Die Failsafe-Dichtung 35 kann als ein scheibenförmiges Flachfederelement ausgebildet sein und kann weiterhin zwischen dem ersten Wandungsabschnitt 31 und dem Aktorgehäuse 81 angeordnet sein.

Die Vorspannung der Failsafe-Dichtung 35 kann durch eine Fail-safe-Feder 37 bewerkstelligt werden.

Darüber hinaus kann den begleitenden Figuren 1, 3, 5, 7 und 9 entnommen werden, dass der Failsafe-Sitz 36 durch mindestens einen ringförmigen Vorsprung ausgebildet sein kann. In den dargestellten Ausführungsbeispielen wird der Failsafe-Sitz 36 durch zwei um die Längsachse L koaxial ausgebildete Vorsprünge gebildet.

Die Durchlassbohrung 19 ist in dem ersten Wandungsabschnitt 31 derart angeordnet, dass die Pilotdichtung 40 nicht dichtend an der Durchlassbohrung 19 anliegen kann. Im Falle eines Ausfalls der elektrischen Energie oder im unbestromten Zustand der Betätigungseinrichtung 80 kann das Fluid entgegen der Dichtwirkung der Failsafe-Dichtung 35 aus dem Pilotventilraum 20 durch die Durchlassbohrung 19 zu dem mindestens einen Auslass strömen, wodurch gewährleistet wird, dass beispielsweise auch im Falle eines Ausfalls der elektrischen Energie das Fahrzeug mit einer bestimmten Dämpfungscharakteristik weiterbetrieben werden kann.

Das erste Federelement 63 weist wie bereits weiter oben im Zusammenhang mit dem ersten Federabschnitt 61 beschrieben wurde einen ersten Endabschnitt und einen zweiten Endabschnitt auf, wobei der erste Endabschnitt an dem Ventilgehäuse 10 abgestützt ist. Gemäß dem dargestellten Ausführungsbeispiel weist das Ventilgehäuse 10 - genauer gesagt der zweite Wandungsabschnitt 32 - den als Hülsenabschnitt ausgebildeten Dom 34 auf, der in der Längsachse L in Richtung des Hauptventilschiebers 54 ragt und auf den der erste Endabschnitt aufgesetzt ist. Dadurch kann die Lage des ersten Federelements 63 vorgegeben werden.

Der zweite Federabschnitt 62 kann gemäß den in den Figuren 1 - 8 gezeigten ersten vier Ausführungsbeispielen durch mindestens zwei abstehende Federfinger 66 gebildet sein, die über den Umfang gleichmäßig verteilt angeordnet sind.

Der zweite Federabschnitt 62 kann durch ein zweites Federelement 64 gebildet sein, das vorzugsweise einstückig ist. Das zweite Federelement 64 kann gemäß der ersten vier Ausführungsbeispiele den mindestens einen - vorzugsweise die mindestens zwei, frei abstehenden Federfinger 66 und den Anschlagsabschnitt 65 umfassen. Der Anschlagsabschnitt 65 kann über den Umfang eine vollständige bzw. vollflächige Auflagefläche für das erste Federelement 63 aufweisen.

Der jeweilige frei abstehende Federfinger 66 weist ein freies Ende 67 auf, wobei das freie Ende 67 der Federfinger 66 den zweiten Endbereich des zweiten Federabschnitts 62 bildet. Das freie Ende des jeweiligen frei abstehenden Federfingers 66 kann zur Bildung des Wirkkontaktes an dem Hauptventilschieber 54, vorzugsweise mit einem abgewinkelten Bereich flächig, anliegen. Dabei ist es noch weiter bevorzugt, wenn das freie Ende des jeweiligen frei abstehenden Federfingers 66 radial außerhalb der Durchlassöffnung 56 und/oder der Ausnehmung 55 an dem Hauptventilschieber 54 anliegt.

Der Anschlagabschnitt 65 kann als torusförmig bzw. ringscheibenförmig beschrieben werden und die frei abstehenden Federfinger 66 sind radial innenliegend angeordnet.

Das zweite Federelement 64 kann beispielsweise als dünnes Stanzteil hergestellt werden, wobei die Federfinger 66 aus der Ebene des Anschlagsabschnittes 65 gemäß den Figuren 2b, 3b, 4b ausgelenkt sind.

Zwischen dem Anschlagabschnitt 65 und dem jeweiligen Federfinger 66 kann ein Luftspalt vorgesehen sein, wobei der Luftspalt endseitig eine Aufweitung aufweisen kann, durch die die Kerbwirkung zwischen dem Anschlagabschnitt 65 und dem zweiten Federabschnitt 62 bzw. den Federfingern 66 reduziert werden kann.

Das erste Ausführungsbeispiel gemäß den Figuren 1 und 2 und das zweite Ausführungsbeispiel gemäß den Figuren 3 und 4 unterscheiden sich lediglich in der Ausgestaltung des zweiten Federelements 64.

Das zweite Federelement 64 kann gemäß den in den Figuren 3 - 8 gezeigten Ausführungsbeispielen 2, 3 und 4 mindestens ein Zentriermittel aufweisen. Das mindestens eine Zentriermittel kann als Zentrierfinger 68 ausgebildet sein. Der jeweilige Federfinger 66 kann den Zentrierfinger 68 umfassen, der - insbesondere an dem freien Ende 67 des Federfingers 66 - von dem jeweiligen Federfinger 66 frei absteht.

Die Federfinger 66 können - wie in Figur 3 und 4b dargestellt ist - gegenüber den freien Enden 67 des Federfingers 66 abgewinkelt sein und können in die Ausnehmung 55 des Hauptventilschiebers 54 eingreifen, um das zweite Federelement 64 zu positionieren.

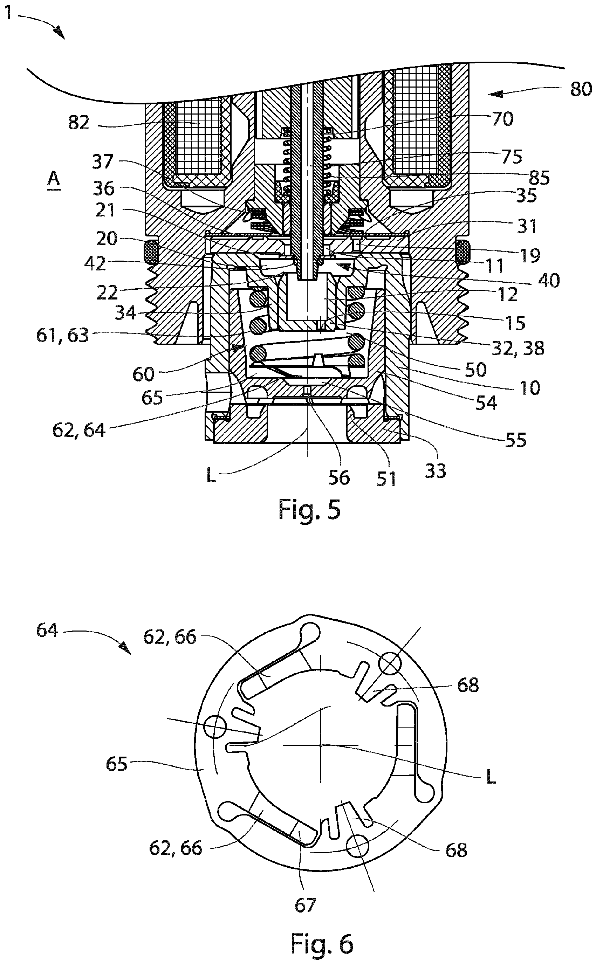

Ein drittes Ausführungsbeispiel ist in den Figuren 5 und 6 dargestellt. Das dritte Ausführungsbeispiel unterscheidet sich gegenüber dem ersten Ausführungsbeispiel und dem zweiten Ausführungsbeispiel ebenfalls lediglich in der Ausgestaltung der Zentriermittel des zweiten Federelements 64, wobei das zweite Federelement 64 drei Zentrierfinger 68 aufweist, die von dem Anschlagsabschnitt 65 radial nach innen abstehen. Die Zentrierfinger 68 sind im Umfangsrichtung bevorzugt zwischen den Federfingern 66 am Anschlagsabschnitt 65 angeordnet.

Angemerkt wird an dieser Stelle, dass in Figur 6 die Zentrierfinger 68 (noch) nicht - wie in Figur 5 dargestellt ist - auf der von den Federfingern 66 in der Längsachse L abgewandten Seite abgewinkelt sind. Wie in Figur 5 angedeutet ist, stehen die Zentrierfinger 68 in der Längsachse L auf der dem ersten Federelement 63 zugewandten Seite in der Längsachse L von dem Anschlagsabschnitt 65 ab und kommen an der Innenseite des zweiten Endbereichs des ersten Federelements 63 zur Anlage, wodurch das zweite Federelement 64 an dem ersten Federelement 63 positioniert gehalten ist.

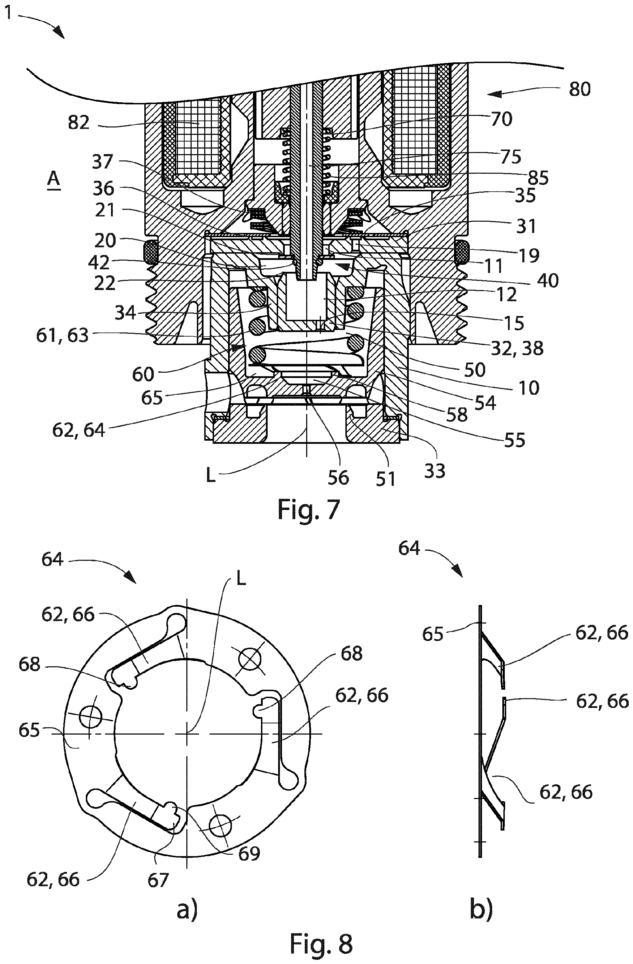

Gemäß dem vierten Ausführungsbeispiel, dargestellt in den Figuren 7 und 8, erfolgt die Positionierung des zweiten Federabschnittes 62 bzw. des zweiten Federelements 64 an einer Außenseite eines an dem Hauptventilschieber 54 ausgebildeten Bundes 58.

Der Bund 58 kann koaxial zu der Längsachse L auf der dem Pilotventilraum 20 zugewandten Seite des Hauptventilschiebers 54 um die Durchlassöffnung 56 angeordnet sein und in Richtung des Pilotventilraums 20 hohlzylinderförmig abstehen.

Um das zweite Federelement 64 positioniert zu halten, kann an dem jeweiligen Federfingern 66 ein - vorzugsweise kuppel- oder halbkreisförmiger - Zentrierfinger 68 angeordnet sein, der nach innen absteht und an der äußeren Mantelfläche des Bundes 58 zur Anlage kommt.

Das fünfte Ausführungsbeispiel unterscheidet sich von den vier zuvor beschriebenen Ausführungsbeispielen in der Ausgestaltung des Anschlagsabschnitts 65 und des zweiten Federabschnitts 62.

Wie der Figur 9 entnommen werden kann, kann in dem fünften Ausführungsbeispiel der zweite Federabschnitt 62 durch ein als Schraubenfeder, insbesondere Schraubendruckfeder, ausgebildetes zweites Federelement 64 gebildet werden, dass koaxial zu dem als Schraubenfeder, insbesondere Schraubendruckfeder, ausgebildeten ersten Federelement 63 entlang der Längsachse L angeordnet ist. Das zweite Federelement 64 weist einen kleineren Außendurchmesser auf als ein Innendurchmesser des ersten Federelements 61.

Der Anschlagabschnitt 65 wird durch einen Federhalter 69 gebildet, wobei der Federhalter 69 eine Form eines Torus mit einem Z-förmigen Querschnitt aufweist. Der Federhalter 69 kann als ein gesondertes Bauteil ausgebildet sein und kann die gegenüberliegenden Enden des ersten Federelements 63 und des zweiten Federelements 64 miteinander koppeln bzw. verbinden.

Der Federhalter 69 kann abschnittsweise als topförmig ausgebildet beschrieben werden und einerseits kann der zweite Endabschnitt des ersten Federabschnitts 61 bzw. des ersten Federelements 63 auf den Federhalter 69 aufgesteckt werden und anderseits kann der erste Endabschnitt des zweiten Federabschnitts 62 bzw. des zweiten Federelements 64 in den Federhalter 69 eingesetzt werden. Das zweite Federelement 64 ist daher in der Längsachse L zumindest teilweise radial innerhalb des ersten Federelements 63 angeordnet. Dadurch wird auch bei dieser Ausführungsform eine kompakte Bauweise realisiert.

Gemäß einer nicht dargestellten Weiterbildung, kann das zweite Federelement 64 einen größeren Innendurchmesser auf als ein Außendurchmesser des ersten Federelements 61 aufweisen. In dieser Ausgestaltung kann das zweite Federelement 64 in der Längsachse L zumindest teilweise radial außerhalb um das ersten Federelements 63 angeordnet sein.

Wie ferner der Figur 9 entnommen werden kann, kann der Hauptventilschieber 54 den zuvor in einem anderen Zusammenhang erwähnten Bund 58 aufweisen, durch den das zweite Federelement 64 an dem der Hauptventilschieber 54 positioniert gehalten wird.

### Bezugszeichenliste

- 1: Druckregelventil
- 10: Ventilgehäuse
- 11: erster Durchtrittskanal
- 12: zweiter Durchtrittskanal
- 15: Öffnung
- 19: Durchlassbohrung
- 20: Pilotventilraum
- 21: erster Ventilsitz
- 22: zweiter Ventilsitz
- 31: erster Wandungsabschnitt
- 32: zweiter Wandungsabschnitt
- 33: dritter Wandungsabschnitt
- 34: Dom
- 35: Fail-Safe-Dichtung
- 36: Fail-Safe-Sitz
- 37: Fail-Safe-Feder
- 38: Einsetzbuchse
- 40: Pilotdichtung
- 42: Pilotdichtungssicherung
- 50: Hauptventilraum
- 51: Hauptventilsitz
- 54: Hauptventilschieber
- 55: Ausnehmung
- 56: Durchlassöffnung
- 58: Bund
- 60: Federanordnung
- 61: erster Federabschnitt
- 62: zweiter Federabschnitt
- 63: erstes Federelement
- 64: zweites Federelement
- 65: Anschlagsabschnitt
- 66: Federfinger
- 67: Freies Ende von 66
- 68: Zentrierfinger
- 69: Federhalter
- 70: Stößel
- 75: Druckausgleichsbohrung
- 80: Betätigungseinrichtung
- 81: Aktorgehäuse
- 82: Erregerspule
- 84: Anker
- 85: Rückstellfeder
- 86: Druckausgleichskammer
- 87: Lagerelement

- L: Längsachse

## Patentansprüche

1. Druckregelventil (1) zum Steuern oder Regeln eines Drucks eines Fluids in einem Pilotdruckraum, aufweisend
- ein Ventilgehäuse (10) mit mindestens einem Einlass, der mit dem Pilotdruckraum fluidisch verbindbar ist, und mindestens einem Auslass, und einem zwischen dem mindestens einen Einlass und dem mindestens einen Auslass angeordneten Hauptventilraum (50) mit einem Hauptventilschieber (54) und einem Hauptventilsitz (51) und einem Pilotventilraum (20) mit einem ersten Ventilsitz (21) und einer Pilotdichtung (40),
- einen Stößel (70) der mittels einer bestrombaren Betätigungseinrichtung (80) entlang einer Längsachse (L) bewegbar ist und die Pilotdichtung (40) zwischen einer ersten Stellung, in der die Pilotdichtung (40) dichtend an dem ersten Ventilsitz (21) anliegt und einer zweiten Stellung entlang der Längsachs (L) bewegen kann,
- wobei der Hauptventilschieber (54) durch eine entlang der Längsachse (L) hohl ausgebildete Federanordnung (60) gegen den Hauptventilsitz (51) vorgespannt gehalten ist,
- wobei die Federanordnung (60) einen steifen ersten Federabschnitt (61) und einen schwachen zweiten Federabschnitt (62) umfasst, die in Reihe geschaltet sind,
**dadurch gekennzeichnet, dass**
der zweite Federabschnitt (62) in Wirkkontakt mit dem Hauptventilschieber (51) steht.

2. Druckregelventil (1) nach einem der vorgenannten Ansprüche,
**dadurch gekennzeichnet, dass**
der erste Federabschnitts (61) und/oder dass der zweite Federabschnitt (62) jeweils durch ein als Schraubenfeder ausgebildetes Federelement (63, 64) gebildet sind bzw. ist.

3. Druckregelventil (1) nach einem der vorgenannten Ansprüche oder nach dem Oberbegriff des Anspruchs 1,
**dadurch gekennzeichnet, dass**
der erste Federabschnitt(61) ein als Schraubenfeder ausgebildetes erstes Federelement (63) umfasst, und dass der zweite Federabschnitt (62) mindestens zwei, vorzugsweise drei, frei abstehende Federfinger (66) umfasst.

4. Druckregelventil (1) nach einem der vorgenannten Ansprüche,
**dadurch gekennzeichnet, dass**
zwischen dem ersten Federabschnitt (61) und dem zweiten Federabschnitt (62) ein Anschlagsabschnitt (65) angeordnet ist, der in einem zusammengedrückten Zustand des zweiten Federabschnitts (62) an dem Ventilgehäuse (10) oder Hauptventilschieber (54) zur Anlage kommt.

5. Druckregelventil (1) nach einem der vorgenannten Ansprüche,
**dadurch gekennzeichnet, dass**
ein zweites Federelement (64) den zweiten Federabschnitt (62) und den Anschlagabschnitt (63) umfasst.

6. Druckregelventil (1) nach einem der vorgenannten Ansprüche,
**dadurch gekennzeichnet, dass**
der Anschlagsabschnitt (63) durch einen Federhalter (69) gebildet ist, der eine ringförmige Form mit einem Z-förmigen Querschnitt aufweist.

7. Druckregelventil (1) nach einem der vorgenannten Ansprüche,
**dadurch gekennzeichnet, dass**
der Federhalter (69) topfförmig den ersten Federabschnitt (61) und/oder den zweiten Federabschnitt (62) zumindest teilweise aufnimmt.

8. Druckregelventil (1) nach einem der vorgenannten Ansprüche,
**dadurch gekennzeichnet, dass**
mindestens ein Zentriermittel vorgesehen ist, das den ersten Federabschnitt (61) und/oder zweiten Federabschnitt (62) positioniert hält.

9. Druckregelventil (1) nach einem der vorgenannten Ansprüche,
**dadurch gekennzeichnet, dass**
das mindestens eine Zentriermittel in eine Ausnehmung (55) und/oder an einen Bund (58) greift, die und/oder der um eine Durchlassöffnung (56) in dem Hauptventilschieber (54) angeordnet ist.

10. Druckregelventil (1) nach einem der vorgenannten Ansprüche,
**dadurch gekennzeichnet, dass**
das mindestens eine Zentriermittel mindestens zwei Zentrierfinger (68) umfasst, die frei abstehend ausgebildet sind.

11. Druckregelventil (1) nach einem der vorgenannten Ansprüche,
**dadurch gekennzeichnet, dass**
der Pilotventilraum (20) in dem Ventilgehäuse (10) ausgebildet ist, und dass der erste Ventilsitz (21) und ein zweiter Ventilsitz (22) auf gegenüberliegenden Seiten des Pilotventilraums (20) angeordnet sind.

12. Druckregelventil (1) nach einem der vorgenannten Ansprüche,
**dadurch gekennzeichnet, dass**
das Ventilgehäuse (10) einen ersten Wandungsabschnitt (31) umfasst, der den ersten Ventilsitz (21) und einen den Pilotventilraum (20) mit dem mindestens Auslass verbindenden ersten Durchtrittskanal (11) aufweist.

13. Druckregelventil (1) nach einem der vorgenannten Ansprüche,
**dadurch gekennzeichnet, dass**
der Wandungsabschnitt (31) mindestens eine Durchlassbohrung (19) aufweist, die einen Bypass um den ersten Ventilsitz (21) bildet.

14. Druckregelventil (1) nach einem der vorgenannten Ansprüche,
**dadurch gekennzeichnet, dass**
auf der von dem ersten Ventilsitz (21) abgewandten Seite des ersten Wandungsabschnittes (31) eine gegen den ersten Wandungsabschnitt (31) vorgespannte Fail-safe-Dichtung (35) angeordnet ist, die die Durchlassbohrung (19) verschließen kann.

15. Druckregelventil (1) nach einem der vorgenannten Ansprüche,
**dadurch gekennzeichne**t, dass
das Ventilgehäuse (10) einen zweiten Wandungsabschnitt (32) aufweist, der den zweiten Ventilsitz (22) umfasst.

16. Druckregelventil (1) nach einem der vorgenannten Ansprüche,
d**adurch gekennzeichne**t, dass
der zweite Wandungsabschnitt (32) eine Einsetzbuchse (38) umfasst.

17. Druckregelventil (1) nach einem der vorgenannten Ansprüche,
**dadurch gekennzeichnet, dass**
die Betätigungseinrichtung (80) druckausgeglichen ist.

18. Schwingungsdämpfer mit einem Druckregelventil (1) nach einem der vorgenannten Ansprüche.
